# EUROPEAN PATENT APPLICATION

(11) **EP 4 424 162 A1**
(43) Date of publication of application: **04.09.2024**
(21) Application number: 23382199.0
(22) Date of filing: 03.03.2023
(51) Int. Cl.: A01N 25/02, A01N 63/20, A01P 3/00, A01P 7/00

(54) **COMPOSITION OF VOLATILE ORGANIC COMPOUNDS OBTAINED FROM PHOTORHABDUS LAUMONDII SUBSP. LAUMONDII AND USES THEREOF**

(71) Applicant: Agencia Estatal Consejo Superior De Investigaciones Científicas, 28006 Madrid (ES); Universidad De La Rioja, 26006 Logroño (La Rioja) (ES)
(72) Inventor: Vicente Díez, Ignacio, Madrid (ES); Campos Herrera, Raquel, Madrid (ES); Vilanova de la Torre, Mar, Madrid (ES)
(74) Representative: Pons

(57) **Abstract**

The present invention discloses a novel strain of *Photorhabdus laumondii subsp. laumondii* with number of deposit CECT 30774. The present invention also relates to a composition comprising volatile organic compounds (VOCs) produced by fermentation of *Photorhabdus laumondii subsp. laumondii* and its use as pesticide against plant pathogens, particularly as fungicide against *Botrytis cinerea* and as insecticide against *Lobesia botrana.* Furthermore, the present invention also relates to the method for obtaining the composition comprises VOCs from *Photorhabdus laumondii subsp. laumondii.*

## Description

The present invention falls within the technical field of pesticides, particularly the present invention refers to a composition comprising volatile organic compounds (VOCs) produced by *Photorhabdus laumondii subsp. laumondii,* preferably the *Photorhabdus laumondii subsp. laumondii* strain with deposit number CECT 30774, and their use as pesticides against plant pathogens, particularly as fungicide against *Botrytis cinerea* and as insecticide against *Lobesia botrana.*

### BACKGROUND ART

Fungal pathogens and different invertebrate pests often attack fruit and vegetables during farming and postharvest, inducing their decay. Biological control research has evolved during the last years and has explored new microorganisms able to perform this function.

Entomopathogenic bacteria are beneficial microorganisms widespread in nature and include mainly members of the genera *Bacillus, Peanibacillus, Brevibacillus, Serratia, Pseudomonas, Xenorhabdus, or Photorhabdus.* Entomopathogenic bacteria can be obligate or facultative arthropod pathogens and display different host ranges and mechanisms of infection. They all have similar abilities to produce a vast diversity of natural antibiotic products to overcome insect immune responses and host-microbiota.

Insect pathogenic (entomopathogenic) bacteria of the genera *Photorhabdus,* which have been described as secondary metabolite producers, are becoming a potential novel source of biopesticides. Overall, *Photorhabdus* are soil Gram-negative γ-Proteobacteria belonging to the family Morganellaceae. They have a mutualistic symbiosis stage with entomopathogenic nematodes (EPNs) of the genus *Heterorhabditis* and an entomopathogenic putative free-life stage in the soil. The classification system of entomopathogenic nematode symbionts has recently recognized 19 species of the genus *Photorhabdus. Heterorhabditis* nematodes use their intestinal lumen to harbor *Photorhabdus* until they find insect larvae to infection (N. Boemare, "Biology, taxonomy and systematics of Xenorhabdus and Photorhabdus." in Entomopathogenic Nematology, 2002, pp. 35-56).

Bacteria in the genera *Photorhabdus* respond to environmental change by the existence of two phenotypically different forms. The different bacteria stage synthesizes numerous specialized metabolites that have roles in symbiosis (Mutualistic-form) and pathogenicity (Phatogenic-form) (N. J. Tobias, et al., 2017, Natural product diversity associated with the nematode symbionts Photorhabdus and Xenorhabdus. Nat. Microbiol. 2, 1676-1685). Thus, despite changes in growth conditions that can suddenly occur, some cells always express the phenotype needed for survival.

Vicente-Díez I., et al., 2021, Insects 12, 1033*,* describes the viability of four EPN species (*Steinernema feltiae, S. carpocapsae, S. riojaense,* and *Heterorhabditis bacteriophora*) as biological control agents against *Lobesia botrana* larval instars (L1, L3, and L5) and pupae. Additionally, the bioactive compounds from their four symbiotic bacteria (*Xenorhabdus bovienii, X. nematophila, X. kozodoii,* and *Photorhabdus laumondii subsp. laumondii,* respectively) were tested as unfiltered ferment (UF) and cell-free supernatant (CFS) against the *L. botrana* larval instars L1 and L3, wherein *Steinernema carpocapsae* registered the most promising results, killing ∼50% L1 and >75% L3/L5 in 2 days.

Vicente-Díez I., et al., 2021, Insects 12, 448*,* describes the efficacy of EPN applications against nymphal instars of *Philaenus spumarius* and the cell-free supernatant of their corresponding symbiotic bacteria: *Steinernema feltiae-Xenorhabdus bovienii, S. carpocapsae-X. nematophila, S. riojaense-X. kozodoii,* and *Heterorhabditis bacteriophora-Photorhabdus laumondii subsp. laumondii.* The direct application of steinernematid EPNs provided promising results, reaching 90, 78, and 53% nymphal mortality rates after five days of exposure for *S*. *carpocapsae, S. feltiae, and S. riojaense,* respectively, and the application of the cell-free supernatant from *P*. *laumondii* resulted in nymphal mortalities of 64%.

However, it is necessary developing alternative biological control pesticides, particularly against fungal pathogens and different invertebrate pests often attack fruit and vegetables during farming and postharvest, inducing their decay, and new sustainable tools to manage perishable aliments during the food supply chain are necessary to guarantee food security.

### DESCRIPTION OF THE INVENTION

The present invention discloses a composition comprising volatile organic compounds (VOCs) produced by *Photorhabdus laumondii subsp. laumondii,* preferably by *Photorhabdus laumondii subsp. laumondii* strain with deposit number CECT 30774, and their use as pesticides against plant pathogens, particularly as fungicides against *Botrytis cinerea* and as insecticides against *Lobesia botrana.* Further, the present invention also discloses the *Photorhabdus laumondii subsp. laumondii* strain with deposit number CECT 30774 as well as the bioactive compounds released by this strain, preferably the VOCs obtained, the culture or culture supernatant of the strain and the formulation of any of these in agricultural formulations.

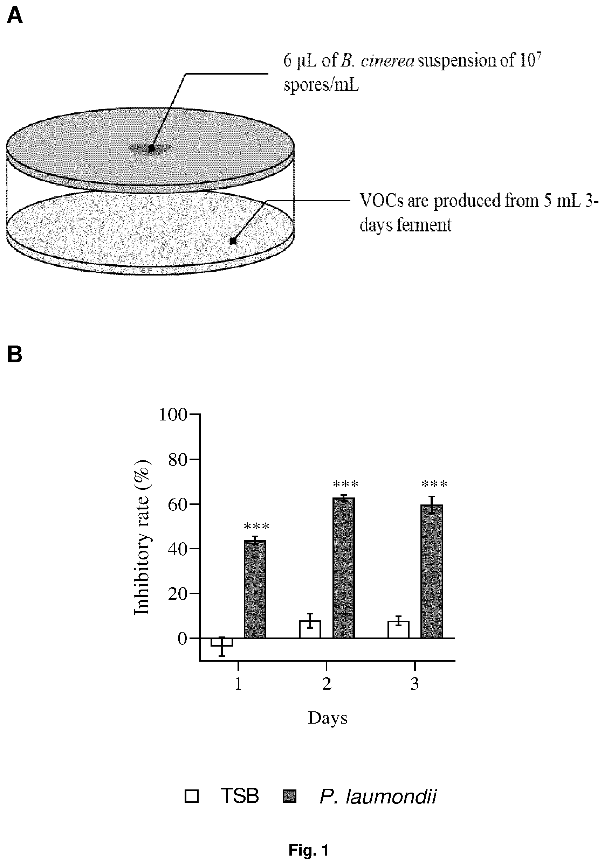

The inventors have obtained the composition comprises volatile organic compounds (or the VOCs composition) from *Photorhabdus laumondii subsp. laumondii,* particularly from *Photorhabdus laumondii subsp. laumondii* strain with deposit number CECT 30774, by fermentation in Triptone Soya Broth (TSB). Then, the VOCs composition of *Photorhabdus laumondii* was evaluated against the *in vitro* mycelial growth of *Botrytis cinerea,* wherein the VOCs composition caused a 60% of inhibition of *Botrytis cinerea* mycelial growth after 3 days exposure to the VOCs composition in double plate test (Figure 1).

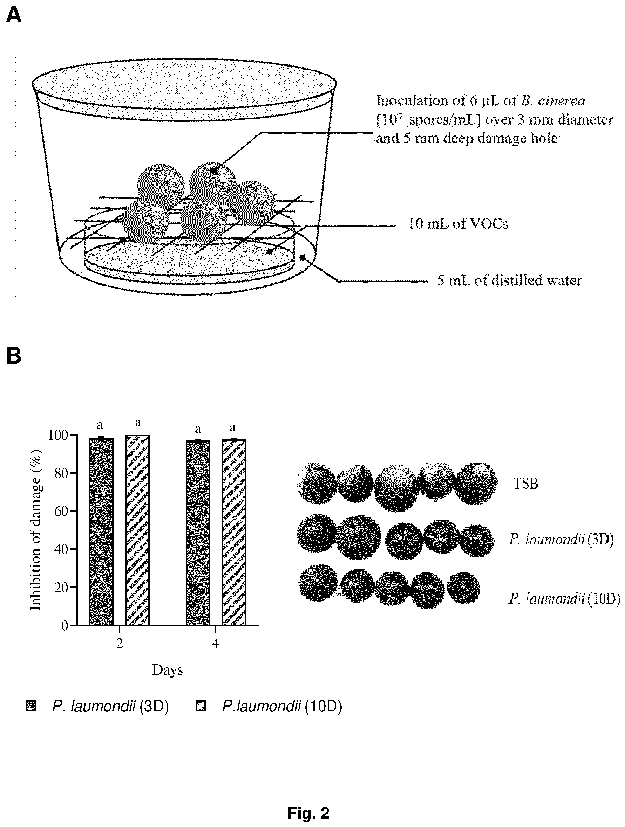

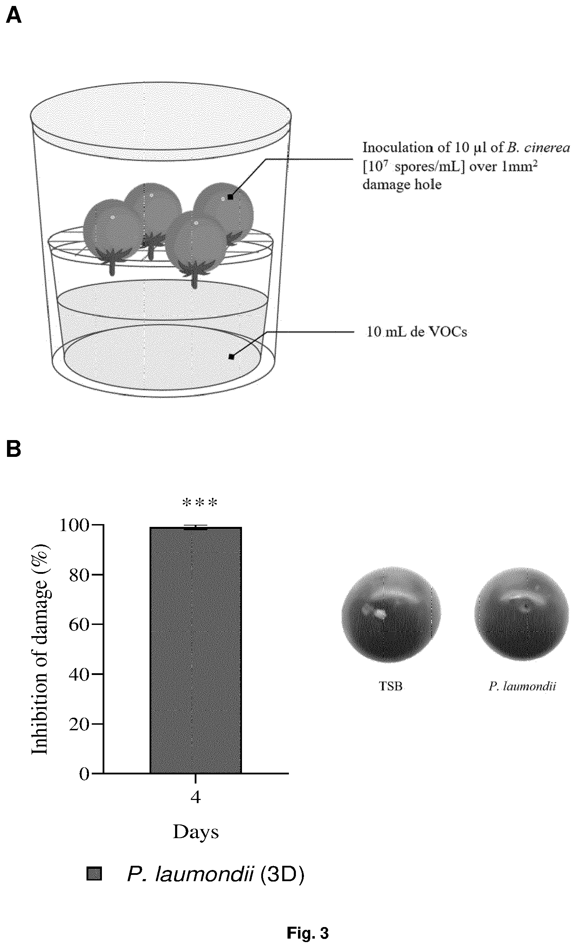

The inventors also evaluated the *in vivo* antifungal activity of VOCs composition and its efficacy in controlling *Botrytis cinerea* rot of grapes and tomatoes (Figures 2 and 3), proving that the direct presence of the VOCs composition produced after 5 days TSB *P. laumondii* ferment completely avoided the growth of the *Botrytis cinerea* over the damage of the postharvest fruit.

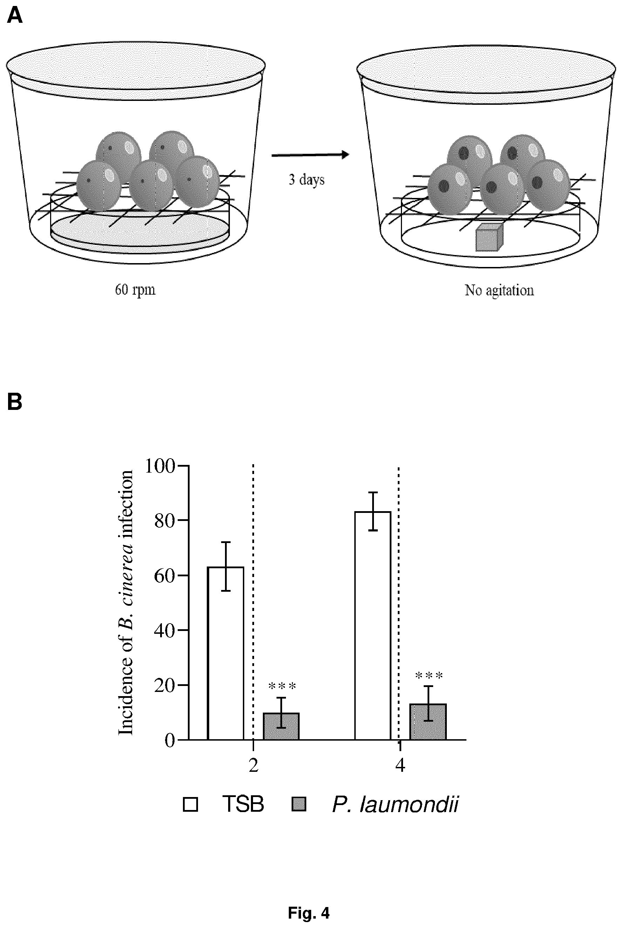

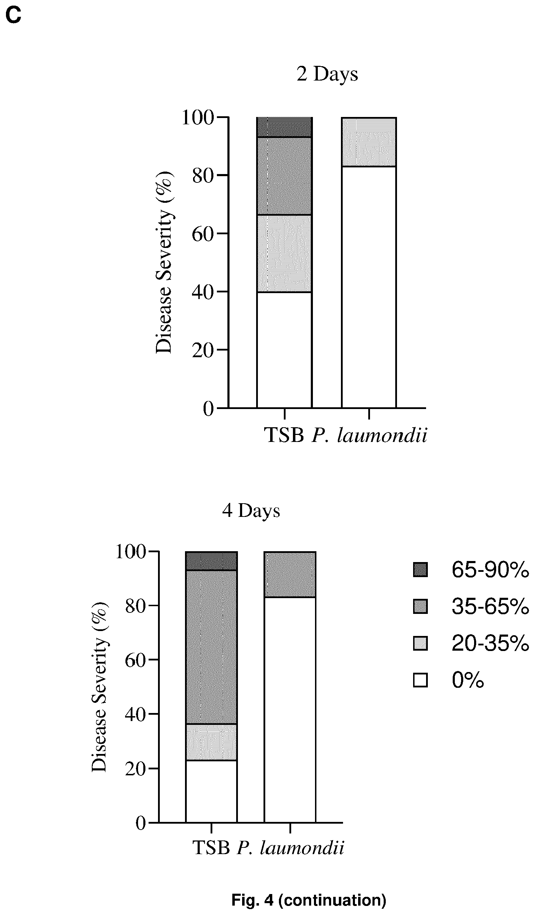

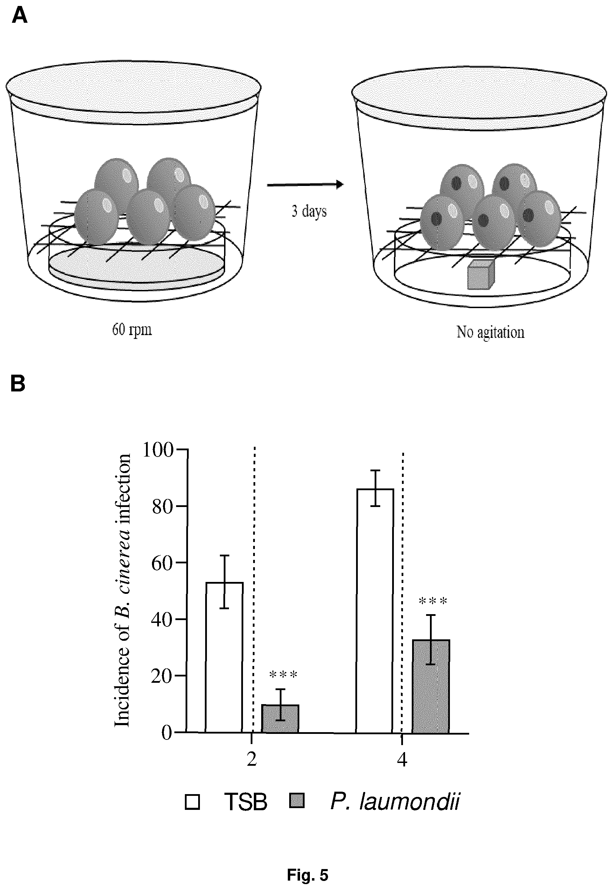

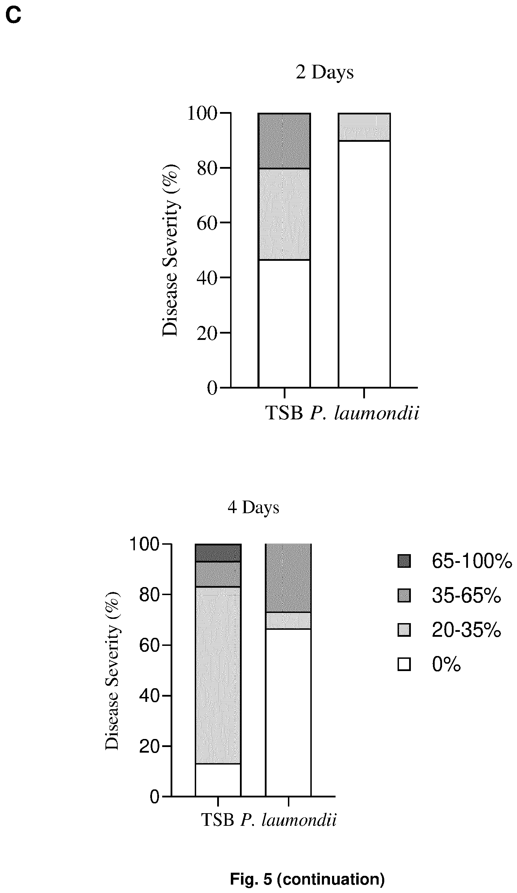

In addition, the inventors proved the antifungal therapeutic (Figure 4) and protective (Figure 5) effect when the 5-days old *P. laumondii* VOCs composition was applied to damaged and not damaged grapes, respectively.

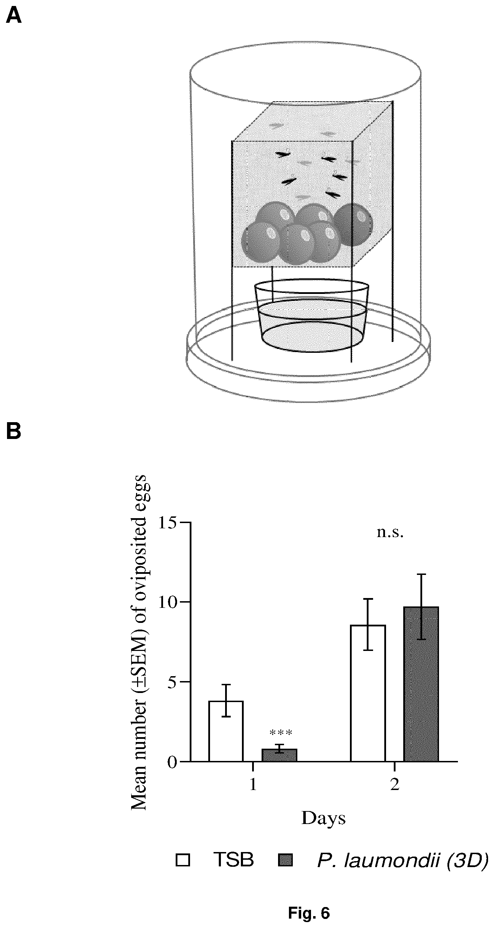

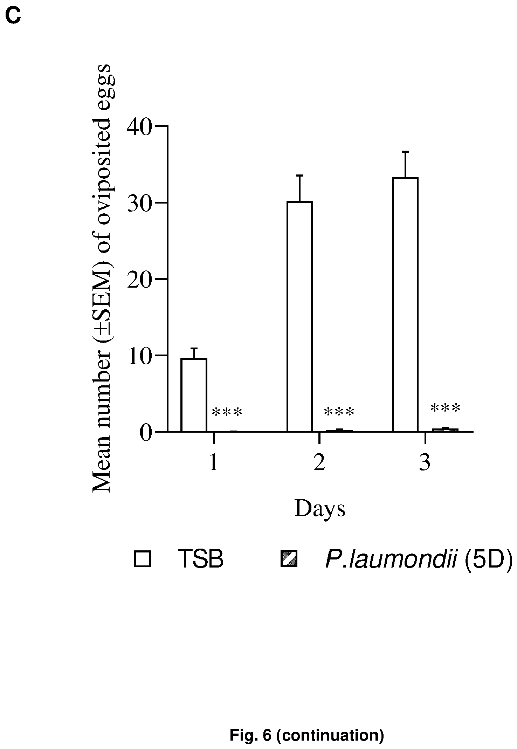

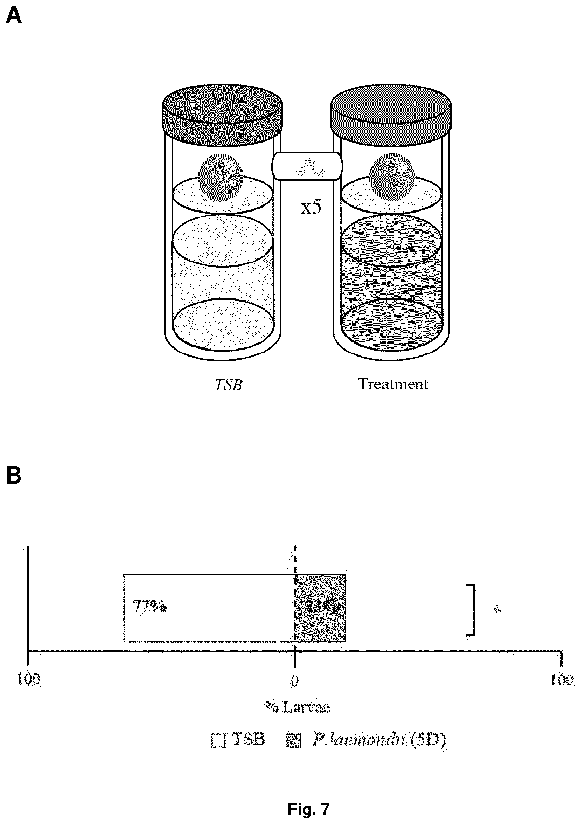

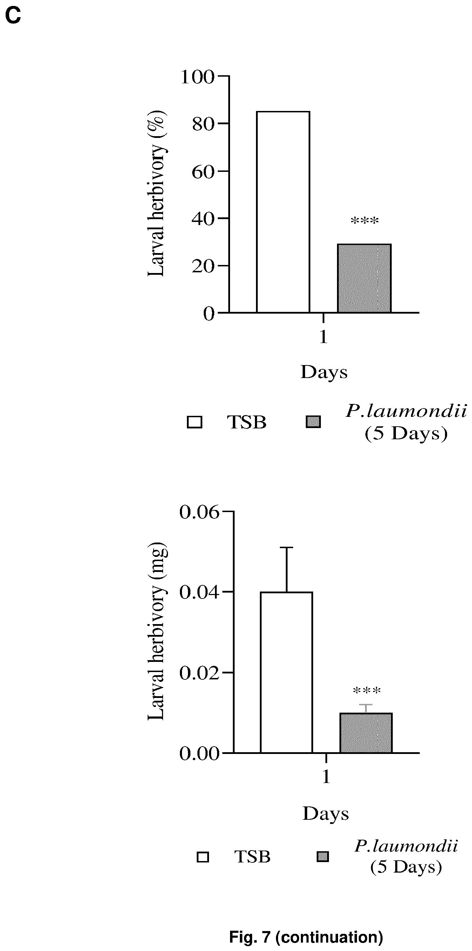

Finally, the inventors observed the insecticide activity against the European Grapevine Moth (EGVM), *Lobesia botrana.* VOCs emitted after 3 and 5-day-old TSB ferments of *P. laumondii* showed significant effect on ovipositional behaviour of *L*. *botrana* with a significant reduction of the number of eggs over the grape surface (Figure 6). In addition, grapes exposed to VOCs composition suffered less damage than those exposed to TSB in a two-choice test, demonstrating the deterrent factor (Figure 7).

Thus, a first aspect of the present invention relates to a composition comprising volatile organic compounds (VOCs) obtained from *Photorhabdus laumondii* subsp. *laumondii,* hereinafter the "VOCs composition of the invention or the first composition of the invention".

The term "volatile organic compounds" or "VOCs" as used herein refers to any organic compound having at least 293.15 K a vapour pressure of 0,01 kPa or having boiling points roughly in the range of 50 to 250°C. Volatile organic compounds (VOCs) encompass VOCs emitted by plants, animals, or microorganisms belong to different chemical groups as terpenoids, alcohols, esters, acetates, aldehydes, C13-norisoprenoids, and carbonyl compounds.

Volatile organic compounds exclude carbon monoxide, carbon dioxide, carbonic acid, metallic carbides or carbonates and ammonium carbonate, which participate in atmospheric photochemical reactions. VOCs are also considered secondary metabolites, which often help organisms in defence, such as plant defence against herbivory.

Particularly, the VOCs composition of the invention is obtained from *Photorhabdus laumondii subsp. laumondii. Photorhabdus* are soil Gram-negative γ-Proteobacteria belonging to the family Morganellaceae. They have a mutualistic symbiosis stage with entomopathogenic nematodes (EPNs) in the species *Heterorhabditis bacteriophora* and an entomopathogenic putative free-life stage in the soil.

The present invention also relates to a new *Photorhabdus laumondii subsp. laumondii* strain which was deposited on January 31^{st} of 2023 under accession number: **CECT 30774** in the Colección Española de Cultivos Tipo (Spanish Culture Type Collection - CECT), located at Parc Cientific Universitat de Valencia, c/ Catedrático Agustín Escardino, 9, 46980 Paterna - Valencia, Spain, under the provisions of the Budapest Treaty.

Thus, other aspect of the present invention relates to a *Photorhabdus laumondii subsp. laumondii* strain with deposit number CECT 30774, hereinafter the "strain of the invention".

In a preferred embodiment of the present invention the VOCs composition is obtained from *Photorhabdus laumondii subsp. laumondii* strain with deposit number CECT 30774.

As the skilled person in the art knows, for the purposes of the present invention the strain of the invention can be included in a culture or a culture supernatant. So, other aspect of the present invention relates to a culture or a culture supernatant of the *Photorhabdus laumondii subsp. laumondii* strain of the invention, hereinafter the "culture or a culture supernatant of the invention".

It is routine practice for the skilled person in the art the techniques and the analytical methods for the obtention or extraction of the VOCS composition from microorganisms, particularly from *Photorhabdus laumondii subsp. laumondii.* Examples of techniques or methods for obtaining VOCS composition from *Photorhabdus laumondii subsp. laumondii* include, without limitation, to direct headspace injection, solid-phase microextraction (SPME), and active sampling with a sorptive matrix blend specifically designed to prevent collection filter breakthrough of VOCs (solid-phase extraction, SPE). Volatile organic compounds are detected by Gas Chromatography-Mass Spectrometry (GC-MS).

Particularly, the volatile organic compounds (VOCs) composition of the invention is obtained by a method comprising:
(i) culturing *Photorhabdus laumondii subsp. laumondii,* preferably the *Photorhabdus laumondii subsp. laumondii* strain with deposit number CECT 30774 of the invention, in bacterial culture media under orbital agitation at 50 rpm to 250 rpm, preferably at 150 rpm, and a temperature between 21 and 30ºC, preferably at 25±2ºC, in darkness for 3 days, obtaining an unfiltered ferment solution, and
(ii) keeping unopened the unfiltered ferment solution obtained in (i) at 21ºC to 30°C and in semi-darkness between 2 and 7 days, preferably during 3 to 5 days, more preferably 3 days, to obtain a solution comprising volatile organic compounds.

As the skilled person in the art knows, it is routine practice the method for quantifying and identifying the VOCs obtained from microorganisms, particularly from *Photorhabdus laumondii subsp. laumondii.* Examples of techniques or methods for quantifying, detection and identifying the VOCs obtained from *Photorhabdus laumondii subsp. laumondii* include, without limitation, to direct Gas Chromatography-Mass Spectrometry (GC-MS), headspace injection, solid-phase microextraction (SPME), and active sampling with a sorptive matrix blend specifically designed to prevent collection filter breakthrough of VOCs (solid-phase extraction, SPE).

As describe above, the VOCs of the composition of the invention encompass different chemical groups of volatiles as terpenoids, alcohols, esters, acetates, aldehydes, C13-norisoprenoids, and carbonyl compounds.

As understood the skilled in the art, the strain of the invention and/or the culture or culture supernatant of the invention may be comprised within an agricultural composition. So, another aspect of the present invention relates to a composition comprising the *Photorhabdus laumondii subsp. laumondii* strain of the invention and/or culture or culture supernatant of the invention, hereinafter the "second composition of the invention".

As the person skilled in the art knows, the first or the second composition of the invention further comprises at least one excipient or co-formulant, which facilitates and assists in increasing plant growth and development, biocontrol against pathogens and/or VOCs production.

Thus, in another preferred embodiment of the invention, the compositions of the invention further comprise at least one agriculturally acceptable excipient or co-formulant and/ or an agriculturally acceptable adjuvant.

The term "agriculturally acceptable excipient" or "agriculturally acceptable co-formulant" used herein refers to a composition, dissolution, mixture, element or product, which is not the VOCs composition of the invention, and which is widely used in agriculture or gardening to facilitate, promote and assist plant growth, improve the quality or fertility of agricultural crop soil, as well as improve its physico-chemical characteristics, to improve the quality of the compositions of the invention and its uses as a biocontrol agent against pathogens or VOCs production.

As the skilled in the art also knows, the compositions of the invention may further comprise at least one adjuvant. The term "agriculturally acceptable adjuvant" used herein refers to a substance, compound or product that is incorporated into the compositions of the invention to improve its performance and functionality through increasing contact area, retention and absorption, correcting problems in the application water, compatibilizing and stabilizing mixture of products. Examples of adjuvants include, without limitation, emulsifier or surfactant, surfactants, dispersing agents, pH correctors, minerals, salts, acids, stabilizers and essences.

Thus, in another preferred embodiment of the present invention, the compositions of the invention further comprise an adjuvant, preferably wherein the adjuvant of the compositions of the invention is selected from the list consisting of: emulsifiers, surfactants, dispersing agents, pH correctors, minerals, salts, acids, stabilizers, essences and any combination thereof.

As describe above, the volatile organic compounds (VOCs) composition produced by *Photorhabdus laumondii* subsp. *laumondii* controls the spread of the fungal or invertebrate pathogen, particularly the VOCs composition produced by *P. laumondii* reduces or eliminates the *Botrytis cinerea,* the gray rot, decreasing the incidence and the severity of the damage and control of the European grapevine moth, *Lobesia botrana,* demonstrating the pesticide activity of said VOCs composition.

So, another aspect of the invention relates to the use of the VOCs composition or the first composition of the invention as pesticide against a plant pathogen, hereinafter the "first use of the invention".

The expression "pesticide against a plan pathogen" used herein refers to any substance or mixture of substances (chemical or biological substances) intended for preventing, destroying, or controlling any pest unwanted species of plants or animals, causing harm during or otherwise interfering with the production, processing, harvest, storage, transport, or marketing of food, agricultural commodities, wood and wood products or animal feedstuffs. Pesticides as used herein includes substances intended for use as a plant growth regulator, defoliant, desiccant, or agent for thinning fruit or preventing the premature fall of fruit. Also used as substances applied to crops either before or after harvest to protect the commodity from deterioration during storage and transport. Examples of plant pathogen include, without limitation, to algae, birds, bacteria, fungi and oomycetes, plant, insects, lampreys, mites, snails, nematodes, rodents and any combination thereof. Likewise, examples of pesticides include, without limitation, to herbicide, insecticide, nematicide, molluscicide, piscicide, avicide, rodenticide, algicide, acaricide, bactericide, insect repellent, animal repellent, microbicide, fungicide, lampricide and any combination thereof.

In other preferred embodiment of the first use of the invention, the pesticide is a fungicide or an insecticide.

In other preferred embodiment of the first use of the invention, the plant pathogen is a fungus or an insect.

In other more preferred embodiment of the first use of the invention the fungus belongs to the *Botrytis* spp., preferably *Botrytis cinerea, Plasmopara vitícola, Erysiphe necator or Phyllosticta ampelicida* or the invertebrate belongs to the *Lobesia* spp., preferably *Lobesia botrana, Sparganothis pilleriana, Eotetranychus carpini, Tetranychus urticae*, *Philaenus spumarius* or *Xylotrechus Arvicola.*

In other more preferred embodiment of the first use of the invention the fungus is *Botrytis cinerea* or the invertebrate is *Lobesia botrana.*

In other more preferred embodiment of the first use of the invention, the plant belongs to the *Vitis* spp. and *Solanum* spp, preferably to the species *Vitis vinifera* or *Solanum lycopersicum.*

As describe above, the VOCs composition can be obtained from the strain, the culture supernatant, the culture and/or the second composition of the invention. So, another aspect of the present invention relates to the use of the *Photorhabdus laumondii subsp. laumondii* strain of the invention, culture or culture supernatant of the invention, and/or the second composition of the invention for producing volatile organic compounds, preferably the VOCs composition of the invention, hereinafter the "second use of the invention".

Particularly, the volatile organic compounds (VOCs) composition of the invention is obtained by the *Photorhabdus laumondii* subsp. *laumondii* fermentation.

So, another aspect of the present invention relates to a method for obtaining the volatile organic compounds composition of the invention, hereinafter the "method of the invention", comprising:
(i) culturing *Photorhabdus laumondii subsp. laumondii,* preferably the *Photorhabdus laumondii subsp. laumondii* strain of the invention, or the compositions of the invention, in bacterial culture media under orbital agitation at 50 rpm to 250 rpm and a temperature between 21 and 30ºC in darkness for 3 days, obtaining an unfiltered ferment solution, and
(ii) keeping unopened the unfiltered ferment solution obtained in (i) at 21ºC to 30°C and in semi-darkness between 2 and 7 days to obtain a solution comprising volatile organic compounds.

In a preferred embodiment of the method of the invention the bacterial culture media is Tryptone Soya Broth media, Nutrient Broth media, Lysogenic Broth media or their supplemented media.

In other preferred embodiment of the method of the invention, the culture of the step (i) is agitated at 100 rpm to 200 rpm, preferably at 100, 110, 120, 130, 140, 150, 160, 170, 180, 190 or 200 rpm, more preferably at 150rpm and/or with a temperature at 25±2ºC.

In other preferred embodiment of the method of the invention, the unfiltered ferment solution in step (ii) is kept unopened in semi-darkness between 2 and 7 days, preferably for 3 to 5 days, more preferably during 3 days.

Other aspect of the invention relates to the composition of volatile organic compounds (VOCs composition) obtained by the method of the invention, hereinafter "the third composition of the invention".

The term "volatile organic compounds" or "VOCs" has been previously defined and said definition is equally valid for the present aspect as well as its embodiments.

As the person skilled in the art knows, the third composition of the invention further comprises at least one excipient or co-formulant, which facilitates and assists in increasing plant growth and development and/or biocontrol against pathogens.

Thus, in another preferred embodiment of the invention, the third composition of the invention further comprises at least one agriculturally acceptable excipient or co-formulant and/ or an agriculturally acceptable adjuvant.

The terms agriculturally acceptable excipient" or "agriculturally acceptable co-formulant" and "agriculturally acceptable adjuvant" have been previously defined and said definitions are equally valid for the present aspect as well as its embodiments.

As describe above, the composition of volatile organic compounds (VOCs) produced by *Photorhabdus laumondii* subsp. *laumondii* controls the spread of the fungal or invertebrate pathogen, particularly the VOCs composition produced by *P. laumondii* reduces or eliminates the *Botrytis cinerea,* the gray rot decreasing the incidence and the severity of the damage and controls of the European grapevine moth, *Lobesia botrana,* demonstrating the pesticide activity of said VOCs composition.

So, another aspect of the invention relates to the use of the composition of volatile organic compound obtained by the method of the invention as pesticide against a plant pathogen, hereinafter the "third use of the invention".

The expression "pesticide against a plan pathogen" has been previously defined and said definition is equally valid for the present aspect as well as its embodiments.

In other preferred embodiment of the third use of the invention, the plant pathogen is a fungus or an insect.

In other more preferred embodiment of the third use of the invention the fungus belongs to the to the *Botrytis spp.,* preferably *Botrytis cinerea, Plasmopara vitícola, Erysiphe necator or Phyllosticta ampelicida* or the invertebrate belongs to the *Lobesia spp*., preferably *Lobesia botrana, Sparganothis pilleriana, Eotetranychus carpini, Tetranychus urticae, Philaenus spumarius or Xylotrechus Arvicola.*

In other more preferred embodiment of the third use of the invention, the plant belongs to the *Vitis* spp. and *Solanum* spp, preferably to the species *Vitis vinifera* or *Solanum lycopersicum.*

### DESCRIPTION OF THE DRAWINGS

**Figure 1****.** *In-vitro* antifungal effect of the volatile organic compounds (VOCs) emitted by 3-days-old *Photorhabdus laumondii* TSB ferments studied on *Botrytis cinerea* mycelial growth. (A) A Schematic diagram showing the method of testing antifungal activity of the VOCs of *P. laumondii.* (B) Inhibitory rate (%) of *B. cinerea* mycelial growth induced by VOCs emitted by 3-days-old *P. laumondii* TSB ferments. Asterisks represent statistically significant differences between treatments according to T-*student* comparison test (*P* < 0.01).
**Figure 2****.** *In-vivo* antifungal effect of volatile organic compounds (VOCs) produced by 3 and 10-days-old *Photorhabdus laumondii* TSB ferment against *Botrytis cinerea* bunch rot on grapes. (A) A schematic diagram showing the method for testing antifungal activity of the VOCs of *P. laumondii.* (B) Inhibitory rate of damage (%) of the *B. cinerea* mycelial growth by the VOCs emitted by 3 and 10-days-old *P. laumondii* TSB ferment (3D and 10D). Different lower case letter (a) represent statistically significant differences between treatments according to Tukey's multiple comparison test (*P* < 0.05).
**Figure 3****.** *In-vivo* antifungal effect of volatile organic compounds (VOCs) produced by *Photorhabdus laumondii* against *Botrytis cinerea* bunch rot on tomatoes. (A) A schematic diagram showing the method for testing antifungal activity of the VOCs emitted by 3-days-old *P. laumondii* TSB ferments. (B) Inhibitory rate of damage (%) of the *B. cinerea* mycelial growth by the VOCs of 3 days-old *P. laumondiiTSB* ferment in the simultaneous co-incubation trials. Asterisks represent statistically significant differences between treatments according to *T-student* comparison test (P< 0.01).
**Figure 4****.** *In vivo* antifungal therapeutic effect of volatile organic compounds (VOCs) produced by *Photorhabdus laumondii* against *Botrytis cinerea* bunch rot on damaged grapes. (A) A schematic diagram showing the method for testing antifungal curative activity of the VOCs of 5-days-old *P. laumondii* TSB ferments. (B) Disease (infection) incidence (DI) caused by *B. cinerea* conditioned by the different treatments. Asterisks indicate significant differences at *** *P* < 0.001, for generalized linear models testing within pair-treatment comparisons of VOCs presence and TSB (control). Values are least-square means ±SE. (C) Disease severity percentage caused by *B. cinerea* conditioned by the different treatments.
**Figure 5****.** *In vivo* antifungal protective effect of volatile organic compounds (VOCs) produced by *Photorhabdus laumondii* against *Botrytis cinerea* bunch rot on healthy grapes. (A) A schematic diagram showing the method for testing antifungal curative activity of the VOCs of 5-days-old *P. laumondii* TSB ferments. (B) Disease incidence (DI) caused by *B. cinerea* conditioned by the different treatments. Asterisks indicate significant differences at *** *P* < 0.001, for generalized linear models testing within pair-treatment comparisons VOCs presence and TSB (control). Values are least-square means ±SE. (C) Disease severity percentage caused by *B. cinerea* conditioned by the different treatments.
**Figure 6****.** Oviposition deterrence assay of *Lobesia botrana,* the grapevine moth, testing the deterrent effect of volatile organic compounds (VOCs) of *Photorhabdus laumondii.* (A) The schematic drawing showing the method for testing the deterrent effect used in the respective assays. (B) Mean number of oviposited eggs on each grape after 1 and 2 days exposed to VOCs produced after 3 days of fermentation (3D). (C) Mean number of oviposited eggs on each grape grape after 1, 2 and 3 days exposed to VOCs produced after 5 days of fermentation (5D). Asterisks represent statistically significant differences between treatments according to *T-student* comparison test at *** *P* < 0.01, and n.s., not significant.
**Figure 7****.** Deterrence to food resource test. Effect of the volatile organic compounds (VOCs) produced by the *Photorhabdus laumondii,* and choice for third stage larval instars of grapevine moth, *Lobesia botrana.* (A) The schematic drawing showing the method for testing the deterrent effect. (B) Larval choice expressed as percentage. (C) Grape damage: percentage of grapes with herbivory damage (larval herbivory %) and milligrams (larval herbivory mg) of grapes eaten. Asterisks represent statistically significant differences between treatments according to T-student comparison test at * *P* < 0.05, and *** *P* < 0.01.

### EXAMPLES

### Methods

### 1. Photorhabdus laumondii subsp. laumondii obtaining and culture conditions

*Photorhabdus laumondii* subsp. *laumondii* was isolated from his mutualistic entomopathogenic nematode (EPN), the nematode *Heterorhabditis bacteriophora.* For isolation of the symbiotic bacteria, disaggregated sterile mechanically ~500 infective juveniles (IJs) of EPN population suspended in 100µL of distilled water using blue pestles assembled in a pellet mixer we exposed. Then, the inventors seeded 50µL of each nematode-bacterium complex suspension on three Petri dishes with Nutrient Agar (NA), Bromothymol blue (Alfa Aesar, Kandel, Germany), and 2,3,5-Triphenyl tetrazolium chloride (TTC, VWR, Chemicals, Barcelona, Spain) (NBTA plates), supplemented with Ampicillin (50 mg/mL) (PanReac AppliChem, ITW Reagents, Barcelona, Spain). After 48 hours, the colonies were checked. A selected colony in Phatogenic-form from NBTA medium was subcultured to generate a pure *Photorhabdus laumondii* culture. The bacteria strain plates were refreshed weekly into another NBTA plate, always checking its purity based on morphology and colour. All of them were testing and sequencing for the bioassays as it is reported by Vicente-Díez I., et al., 2021, Insects 12*.*

The natural products getting by *Photorhabdus* were obtained by the inoculation of one specific colony of the plates of each bacteria in 250mL of Triptone Soya Broth (TSB) (VWR Chemicals, Barcelona, Spain). For the optimal generation of the volatile organic compounds (VOCs), two Erlenmeyer were incubated on an orbital shaker at 50-250 rpm, preferably at 150 rpm, and a temperature between 21 and 30ºC, preferably 25± 2ºC, in darkness for three days. The ferment contained inside the Erlenmeyer flask was kept at room temperature without open and in semidarkness condition at 21 to 30ºC, preferably at 22ºC, for 2 to 7 additional days, preferably for 3 days. This step is the crucial moment to let the bacteria be able to start the production of volatile deterrent products. Stopping agitation to reduce bacterial growth and checking the differences between the different days after inoculation.

### 2. Antifungal activity

### 2.1. Botrytis cinerea isolation and identification

The strain of *Botrytis cinerea* used in the test was isolated from an infected grape cluster in the wine region of La Rioja and transferred to Potato Dextrose Agar (PDA) (VWR Chemicals, Barcelona, Spain) medium. Spore preparation for the bioassays was conducted taking the spores from the PDA plate with MgSO₄·5H₂O 10mM and placing them in a tube. Spores were detached from the mycelium by vortex. Then, the mix is filtered with a thin layer of cotton into another tube and is centrifuged 10 minutes at 5000 rpm. The pellet (spores) was recovered with 1mL of MgSO₄·5H₂O 10mM. Hereafter, the concentration of spores was calculated with *Neubauer* hemoctometer and the concentration for bioassays was prepared.

The virulence of this isolate of *B. cinerea* to grapevine and tomato was confirmed by its spore's inoculation on detached leaves of the grapevine, on grapes and directly on fruit cutting grapevine plants. The strain was stored at -80ºC in 20% glycerol. Furthermore, the molecular identification of *B. cinerea* was completed by following DNA extraction described by Bueno-Pallero F.A., etal., 2020, Insects 11, 1-18*.*

First, the mycelium was mechanically disaggregated for 1 minute by using a sterile blue pestle assembled to a pellet mixer (VWR International, Lutterworth, UK). Then, the maximum yield protocol of the Speedtools tissue DNA extraction kit (Biotools, Madrid, Spain) was followed. DNA of each sample was eluted in 20µL of Elution Buffer and analyzed for quality and quantity (nanodrop system, Thermo Scientific 200C spectrophotometer). For ensuring optimal amplification in conventional PCR, all the DNA samples were diluted to a range between 0.5-1 ng/µL and stored at -20°C until subsequent analysis.

Using the universal primers ITS1 and ITS4, the ITS region (ITS1, 5.8S and ITS2) was evaluated. Each reaction was performed in a final volume of 20µL and included 1µL DNA template, 200nM dNTP mix (Promega, provided by Promega Biotech Iberica SL), 1×PCR buffer (5×ColorlessGoTaq^{®} Reaction buffer, Promega), 400nM of each primer (Biosearch Technologies, supplied by Biotools, Spain) with 0.68U GoTaq^{®} G2 DNA Polymerase (Promega), employing the MyCycler Thermal Cycler (Bio-Rad, Spain). Each PCR product was verified for expected size by visualization after electrophoresis in 2% agarose gel in TAE (pH 8.3 ± 0.1) (Fisher Bioreagents, Ltd., Madrid, Spain) run along the reference BenchTop 100bp DNA ladder (Promega). Individual bands were purified by QIAquick Gel Extraction (Qiagen^{®}, Hilden, Germany) and the occurrence of the expected band verified in a TAE 0.8% agarose gel. All the samples were sequenced at Macrogen (Macrogen Europe Laboratory, Inc., Madrid, Spain). For each sample, the sequences (forward and reverse) were assembled (Geneious, R.5.6.5., Biomatters, Inc., Auckland, New Zealand), compared to reported sequences using Blast (http://blast.ncbi.nlm.nih.gov) and submitted to Genbank (accession number OQ285858).

### 2.2. In vitro antifungal activity

The VOCs of *Photorhabdus laumondii* were evaluated against the mycelial growth of *Botrytis cinerea.* The double-plate method was used for a proof of concept bioassay. In the top-plate (5.5 cm Petri dish) was pooled Potato Dextrose Agar (PDA) culture medium for the fungal pathogen; in the base-plate, the VOCs were emitted by the 3-days ferment of *P. laumondii* subsp. *laumondii.* Then, 6 µL of *B. cinerea* [1×10⁷ spores/mL] was pipetted in the middle of the top-plate and 5 mL of *Photorhabdus* ferment producing VOCs was added to the base-plate (Figure 1A). The control treatment was double-plate system where 5 mL TSB was added in the base-plate. Each treatment comprised fifteen replicates and the whole experiments was conducted twice. The double plate systems were incubated for 4 days at 22 ºC and relative humidity (RH) of 60%. The fungal pathogen growth area was calculated by measuring the average diameter of the *Botrytis* mycelial growth. The inhibitory growth rate (IR) was calculated following the formula: [(The average diameter of mycelial growth in the PDA control - The average diameter mycelial growth in the treatment) / The average diameter of mycelial growth in the PDA control)] × 100.

### 2.3. In vivo antifungal activity

### 2.3.1. Efficacy of P. laumondii VOCs in controlling botrytis gray rot of grapes and tomatoes

Ripe red grapes (*Vitis vinifera* cv. Tempranillo) and cherry tomatoes (*Solanum lycopersicum*) were randomly collected from an organic field located in Logroño (La Rioja, Spain, 42° 26' N and 2° 30' W). Both were cultured in organic system and had not received any pre-harvest fungicide treatment. Healthy and homogenous grape berries and cherries were selected and randomly assigned to different treatments. Before inoculation and treatment, fruits were surface disinfected by dipping for 1 min in 3% (w/v) of sodium hypochlorite (NaOCI) solution, washed with tap water and then air-dried for 2 hours.

Artificial wounds were performed using a sterile pipette tips to make 5 mm deep and 3 mm diameter wide wounds (one wound for each berry) along the berry equatorial areas. Each wound was inoculated with 6 µL drop of 1×10⁷ spore/mL of *B. cinerea.* The grape berries were placed on plastic packaging trays over 7 cm net. Below each net with fruit, the inventors included a 9 cm diameter Petri dish with 10 mL *P. laumondii* TSB ferment (3 and 10-days old) that produce the VOCs. Control treatments contained only TSB in the Petri dish (Figure 2A). To create a humid environment, 5 mL of distilled water was placed on cavity trays.

Similarly, the tomato berries were inoculated with 10 µL of *B. cinerea* [10⁷ spores/mL] over 1mm² damage hole and were placed on plastic packaging trays over 7 cm net with 10 mL *P. laumondii* TSB ferment (3-days old) that produce the VOCs (Figure 3A). In both type of experiments, to create a humid environment, 5 mL of distilled water was placed on cavity trays.

The trays were incubated at 22 ºC and RH of 95% for 4 days after inoculation to provide favourable conditions for the postharvest onset of the disease. In the grape experiment, for each treatment, three replicate of five grape fruits were used for each treatment and the experiment was conducted twice. In the tomato experiment, for each treatment, three replicate of four tomato fruits were used for each treatment and the experiment was conducted twice.

Data concerning lesion diameter was assessed by measuring fungus growth area using image analysis with Image J^{®} program (v. 1.50i, MD, USA) two and four days after pathogen inoculation. The inhibitory growth rate (IR) was calculated as described in the section 2.2.

### 2.3.2. Therapeutic and Protective effect of VOCs controlling botrytis gray rot on wounded grapes

Red grapes disinfected following the same protocol than described in the above section 2.3.1 were placed following the same experimental design with the net and the 9 cm diameter Petri dish (Figure 4A and 5A). The grapes were exposed to the VOCs emitted by the 10 mL *P. laumondii* TSB ferment (5-days old) at 60 rpm agitation, photoperiod of light (L):darkness(D) 16L:8D and 22ºC for 3 days. To evaluate the therapeutic effect of VOCs, the grapes were wounded *before* their exposure to the VOCs; to evaluate the protective effect, the grapes were not damaged before exposure to VOCs. After the 3-days exposure to the VOCs, the Petri dish was removed and, instead, a piece of 1 cm³ of a four days old *B. cinerea* culture was placed in a new base plate. The humidity kept by 5 mL of distilled water inside of the packaging. At this moment, for the protective bioassay, the grapes were wounded to facilitate the incidence of the disease.

Data concerning the disease incidence (DI) and the disease severity (DS) were assessed by counting the number of infected grapes and using an empirical 1-to-4 rating scale, respectively. The DS rating scale was: 0% = no visible symptoms; 20-35% = soft rot; 65% = mycelial growth and 90% = sporulation; two and four days after pathogen inoculation.

### 2.4. Statistical analysis

Data from *in-vitro* and *in-vivo* experiments were analyzed separately by using SPSS 25.0 (SPSS Statistics, SPSS Inc., Chicago, IL, USA). The analysis was performed using the General Linear Model (GLM), using *P* < 0.05 for assessing statistical differences. After significant effects were identified, differences were further elucidated based on Tukey's Honestly Significant Difference (Tukey HSD) test. All analyses were performed with used least-square means±SE as descriptive statistics. Non-transformed means are presented in the results.

### 3. Control of invertebrate pests

### 3.1. Lobesia botrana isolation and identification

The European Grapevine Moth (EGVM), *Lobesia botrana* (Lepidoptera: Tortricidae), population was reared in an environmentally controlled chamber at 22ºC and 60% RH, with light (L):darkness(D) 16L:8D photoperiods, at the Institute of Grapevine and Wine Sciences (ICVV, Logroño, La Rioja, Spain). Under these conditions, 20-30 adults were placed into one transparent truncated conical cup with one piece of honey-soaked cotton (1:10 water diluted) as a source of nutrients. Every 2-3 days, the eggs that had been laid all over the plastic surface were collected and combined from all of the adult cups in the rearing boxes with filter paper on the bottom and pieces of a semisynthetic diet. Larval growth 2-3 days per week was checked, adding food as needed while they completed their five larval instars. Lastly, the pupae were removed in order to start the ovipositional protocol with new adults. The same larval cohort age was employed for each experimental trial.

### 3.2. Anti-ovipositional activities

The effect of *P. laumondii* VOCs on oviposition by female *L. botrana* was tested in laboratory conditions. Red grapes cluster of *Vitis vinifera* var. Tempranillo, each with 6 grapes, were used in this experiment. The effect of the VOCs emitted by the *P*. *laumondii* TSB ferment was performed by placing 20 mL of the 3 and 5 days-old ferment (3D and 5D) in 7.5 cm diameter and 4.5 cm deep plastic container (Figure 6A). Then, over those containers, a mesh bag was placed avoiding any physical contact. A glass container covers all the system to avoid the loss of the VOCs. All the system was placed in an orbital shaker at 60 rpm, 22ºC and 60% RH, with 16:8 (L: D) photoperiods. After 1 and 2 days, the number of individual eggs was counted on each single berry. A randomized block design was used in this study, with each block consisting of three mesh bags with 6 grapes and 10 adults (5 males and 5 female). The whole experiment was conducted twice.

### 3.3. Anti-herbivory activities

Dual-choice experiments were conducted using in-house laboratory olfactometers constructed with two 50 mL plastic Falcon tubes connected by a plastic tube 7 cm apart. A cloth net was placed 3.5 cm from the top of the tube to limit the area of interaction. Then, one grape (desinfected as described in above section 2.3.1) was placed in each of the cloth nets and five *L. botrana* larvae (L3) of the same age cohort were placed in the center of the connecting tube. The effect of VOCs emitted by the *P. laumondii* ferment were examined by placing 35 mL of ferment in one of the falcon tubes and TSB as a control in the other tube of the two-choice system (Figure 7A). From each olfactometer, the position of the larvae, whether or not there was herbivory damage to the grapes, and the weight loss caused by herbivory, if any, were collected. Treatment orientations were randomized to account for potential direction bias. Larvae were recovered from herbivory treatments to confirm active feeding.

### 3.4. Statistical analysis

Data were analyzed separately by using SPSS 25.0 (SPSS Statistics, SPSS Inc., Chicago, IL, USA), using *P* < 0.05 for assessing statistical differences. For all ovipositional and feeding deterrence bioassays, the arithmetic means were calculated and analyzed by using one-way analysis of variance (ANOVA). Least-square means±SE as descriptive statistics were used. Finally, larval performance and grape loss biomass data were analyzed using one-way ANOVA comparisons.

### Results

### 1. In vitro antifungal activity

The VOCs generated by cultures of 3-days-old *P. laumondii* caused 60% of inhibition of *B. cinerea* mycelial growth after 3 days exposure to the VOCs in double plate test (Figure 1B).

### 2. In vivo antifungal activity

### 2. 1. Antifungal activity of VOCs produced by P. laumondii

The *in-vivo* tests conducted on grapes (Figure 2B) and cherries (Figure 3B) showed that the direct presence of the VOCs produced by 3 and 10-days-old *P. laumondii* TSB ferment avoid ~100% the growth of the *botrytis* over the damage of the postharvest fruit.

### 2.2. Therapeutic and Protective effect of VOCs controlling botrytis bunch rot on wounded grapes

The VOCs produced by *P. laumondii* 5-days-old TSB ferment demonstrated to have a therapeutic and protective effect on grapes. The presence of the VOCs kept the incidence of botrytis on damage grapes below 20% (Figure 4B). Furthermore, the severity of the damage was reduced 60% and the effect was maintained for 4 days (Figure 4C).

In healthy grapes (without physical damage on the surface, protective effect), the VOCs also control botrytis damage compared with the control (Figure 5B) and the severity of damage was never higher than 65% to the grapes treated preventively with the VOCs (Figure 5C).

### 3. Control of invertebrate pests

### 3. 1. Anti-ovipositional activities

Volatile organic compounds (VOCs) emitted by 3-day-old *P. laumondii* TSB ferments produced 20% reduction on ovipositional behaviour of *L. botrana* after 1-day exposure, although this effect was not different than the control after 2-days (Figure 6B). However, the oviposition of female moths was completely prevented (100%) when exposing to VOCs generated by 5-day-old *P. laumondii* TSB VOCs (Figure 6C).

### 3.2. Anti-Herbivory activities

Only 23% of the larvae (of the total of 150 larvae, n=150) moved toward the treatment with VOCs, statistically lower than those than moved to the control (Figure 7B). In addition, herbivory in the grapes was reduced by the effect of the treatments, with herbivory of less than 40% compared to the controls, which suffered herbivory of more than 80% of the grapes (Figure 7C).

## Claims

1. A composition comprising volatile organic compounds obtained from a fermentation of *Photorhabdus laumondii subsp. laumondii,* preferably wherein the *Photorhabdus laumondii subsp. laumondii* is the strain with deposit number CECT 30774.

2. A *Photorhabdus laumondii subsp. laumondii* strain with deposit number CECT 30774.

3. A culture or a culture supernatant of the *Photorhabdus laumondii subsp. laumondii* strain according to claim 2.

4. A composition comprising the *Photorhabdus laumondii subsp. laumondii* strain according to claim 2 and/or the culture and/or culture supernatant according to claim 3.

5. The composition according to the claims 1 or 4, further comprises an agriculturally acceptable excipient and/or adjuvant.

6. Use of the composition according to any of the claims 1, 4 or 5, as pesticide against a plant pathogen, preferably wherein the plant pathogen is a fungus or an insect.

7. Use according to claim 6, wherein the fungus belongs to the *Botrytis* spp., preferably *Botrytis cinerea, Plasmopara vitícola, Erysiphe necator or Phyllosticta ampelicida* or the invertebrate belongs to the *Lobesia* spp., preferably *Lobesia botrana, Sparganothis pilleriana, Eotetranychus carpini, Tetranychus urticae, Philaenus spumarius* or *Xylotrechus Arvicola.*

8. Use according to claim 6 or 7 wherein the plant belongs to the species *Vitis vinifera* or *Solanum lycopersicum.*

9. Use of *Photorhabdus laumondii subsp. laumondii* strain according to claim 2, the culture or culture supernatant according to claim 3 and/or the composition according to claim 4 or 5 for producing volatile organic compounds.

10. Method for obtaining the composition comprises volatile organic compounds according to claim 1 comprising:
(i) culturing *Photorhabdus laumondii subsp. laumondii,* preferably the *Photorhabdus laumondii subsp. laumondii* strain according to claim 2 or the composition according to claim 4 or 5, in bacterial culture media under orbital agitation at 50 rpm to 250 rpm, preferably at 150 rpm, and a temperature between 21 and 30ºC, preferably at 25±2ºC, in darkness for 3 days, obtaining an unfiltered ferment solution, and
(ii) keeping unopened the unfiltered ferment solution obtained in (i) at 21ºC to 30°C and in semi-darkness between 2 and 7 days, preferably during 3 days, to obtain a solution comprising volatile organic compounds.

11. The method according to claim 10, wherein the bacterial culture media is Tryptone Soya Broth media, Nutrient Broth media, Lysogenic Broth media or their supplemented media.

12. A composition comprising volatile organic compounds obtained by the method according to claim 10 or 11, preferably wherein the composition further comprising an agriculturally acceptable excipient and/or adjuvant.

13. Use of the composition comprises volatile organic compounds according to claim 12 as pesticide against a plant pathogen, preferably wherein the plant pathogen is a fungus or an insect.

14. Use according to claim 13 wherein the fungus belongs to the species *Botrytis cinerea* or the insect belongs to the species *Lobesia botrana.*

15. Use according to claim 13 or 14 wherein the plant belongs to the species *Vitis vinifera* or *Solanum lycopersicum.*
